# EUROPEAN PATENT APPLICATION

(11) **EP 4 752 985 A1**
(43) Date of publication of application: **03.06.2026**
(21) Application number: 24844643.7
(22) Date of filing: 12.07.2024
(51) Int. Cl.: H01M 4/66, H01M 4/70, H01M 10/0564, H01M 10/0525

(54) **ELECTROCHEMICAL APPARATUS AND ELECTRONIC APPARATUS**

(30) Priority: 27.07.2023 CN 202310932496
(71) Applicant: Ningde Amperex Technology Limited, Ningde, Fujian 352100 (CN)
(72) Inventor: CHI, Jinfeng, Ningde, Fujian 352100 (CN)
(74) Representative: Dehns Germany Partnerschaft mbB
(86) International application number: PCT/CN2024/105278
(87) International publication number: WO 2025/020951

(57) **Abstract**

The present application provides an electrochemical apparatus and an electronic apparatus. The electrochemical apparatus includes a wound electrode assembly and an electrolyte. The wound electrode assembly includes a positive electrode sheet, a negative electrode sheet, and a separator. The separator is provided between the positive electrode sheet and the negative electrode sheet. The positive electrode sheet includes a positive electrode current collector and a positive electrode material layer located on a surface of the positive electrode current collector. The negative electrode sheet includes a negative electrode current collector and a negative electrode material layer located on a surface of the negative electrode current collector. The positive electrode current collector is an aluminum foil, a thickness of the positive electrode current collector is Ha µm, a tensile strength of the positive electrode current collector is Ta MPa, the negative electrode current collector is a copper foil, a thickness of the negative electrode current collector is Hc µm, a tensile strength of the negative electrode current collector is Tc MPa, and a conductivity of the electrolyte is S mS/cm, satisfying: 1.6≤Ta×Ha/(Tc×Hc)+0.1S≤3. Through the above settings, the safety performance of the electrochemical apparatus can be improved.

## Description

The present application claims priority to Chinese Patent Application No. 202310932496.5, filed with the China National Intellectual Property Administration on July 27, 2023 and entitled "ELECTROCHEMICAL APPARATUS AND ELECTRONIC APPARATUS", which is incorporated herein by reference in its entirety.

### TECHNICAL FIELD

The present application relates to the technical field of electrochemistry, and particularly relates to an electrochemical apparatus and an electronic apparatus.

### BACKGROUND

Electrochemical apparatuses (for example, lithium-ion batteries) have many advantages such as high specific energy density, long cycle life, high nominal voltage, low self-discharge rate, small volume, and light weight, and thus have wide applications in the field of consumer electronics.

In the preparation process of lithium-ion batteries, after the electrode sheets are pressed in the hot pressing process, metal burrs may be generated due to local breakage. In addition, under the action of external forces, the lithium-ion battery, for example, after being squeezed during the safety test process, has its structure damaged and is also prone to generate metal burrs. The above metal burrs are likely to affect the safety performance of the lithium-ion battery.

### SUMMARY

The purpose of the present application is to provide an electrochemical apparatus and an electronic apparatus to improve the safety performance of the electrochemical apparatus.

It should be noted that in the summary of the present application, the present application is explained by taking a lithium-ion battery as an example of the electrochemical apparatus, but the electrochemical apparatus of the present application is not limited to the lithium-ion battery. The specific technical solution is as follows:

A first aspect of the present application provides an electrochemical apparatus, which includes a wound electrode assembly and an electrolyte, where the wound electrode assembly includes a positive electrode sheet, a negative electrode sheet, and a separator, the separator is provided between the positive electrode sheet and the negative electrode sheet, the positive electrode sheet includes a positive electrode current collector and a positive electrode material layer located on a surface of the positive electrode current collector, and the negative electrode sheet includes a negative electrode current collector and a negative electrode material layer located on a surface of the negative electrode current collector; where the positive electrode current collector is an aluminum foil, a thickness of the positive electrode current collector is Ha µm, a tensile strength of the positive electrode current collector is Ta MPa, the negative electrode current collector is a copper foil, a thickness of the negative electrode current collector is Hc µm, a tensile strength of the negative electrode current collector is Tc MPa, and a conductivity of the electrolyte is S mS/cm, satisfying: 1.6≤Ta×Ha/(Tc×He)+0.1S≤3. By selecting current collectors within the above ranges, and regulating the value of Ta×Ha/(Tc×Hc)+0.1S within the above range, the probability of burrs appearing on the positive electrode sheet can be reduced, and at the same time, the metal burrs generated by the electrochemical apparatus under the action of external forces can be passivated, thereby reducing the risk of safety problems caused by metal burrs in the electrochemical apparatus and improving the safety performance of the electrochemical apparatus.

In some embodiments of the present application, a purity of the aluminum foil of the positive electrode current collector is greater than or equal to 99%, 9≤Ha≤20, and 150≤Ta≤300. By regulating the purity of the aluminum foil, and the values of Ha and Ta within the above ranges, it is beneficial to improve the safety performance of the electrochemical apparatus.

In some embodiments of the present application, a purity of the copper foil of the negative electrode current collector is greater than or equal to 98%, 4≤Hc≤16, and 400≤Tc≤600. By regulating the purity of the copper foil, and the values of Hc and Tc within the above ranges, it is beneficial to improve the safety performance of the electrochemical apparatus.

In some embodiments of the present application, the electrolyte includes a lithium salt, a non-aqueous organic solvent, and an ether nitrile compound, and based on a mass of the electrolyte, a mass percentage C of the ether nitrile compound is 0.01% to 8%, preferably 1% to 3%. By regulating the mass percentage of the ether nitrile compound within the above range, it is beneficial to improve the safety performance of the electrochemical apparatus.

In some embodiments of the present application, the ether nitrile compound includes at least one of ethylene glycol bis(propionitrile) ether, glycerol tris(propionitrile) ether, propylene glycol bis(propionitrile) ether, or polyvinyl alcohol-β-propionitrile ether. By selecting the ether nitrile compound within the above range, it is beneficial to improve the safety performance of the electrochemical apparatus.

In some embodiments of the present application, the ether nitrile compound content and the current collector satisfy: 0.07≤Ha/Ta+0.2C≤1.5. By regulating the value of Ha/Ta+0.2C within the above range, it is beneficial to improve the safety performance of the electrochemical apparatus.

In some embodiments of the present application, 5≤S≤14. By regulating the value of S within the above range, it is beneficial to improve the cycle performance and storage performance of the electrochemical apparatus.

In some embodiments of the present application, a thickness of the positive electrode sheet is 240 µm to 380 µm, and/or a thickness of the negative electrode sheet is 160 µm to 240 µm. By regulating the thickness of the positive electrode sheet and/or the negative electrode sheet within the above range, it is beneficial to improve the energy density of the electrochemical apparatus.

In some embodiments of the present application, the positive electrode current collector includes Fe, Si, and Cu, and based on a mass of the positive electrode current collector, a mass percentage W_{Fe} of Fe satisfies 0.1%≤W_{Fe}≤0.5%, a mass percentage W_{Si} of Si satisfies 0.02%≤W_{Si}≤0.35%, and a mass percentage W_{Cu} of Cu satisfies 0.01%≤W_{Cu}≤0.15%. By regulating the mass percentages of Fe, Si, and Cu in the positive electrode current collector within the above ranges, it is beneficial to improve the safety performance of the electrochemical apparatus.

A second aspect of the present application provides an electronic apparatus, which includes the electrochemical apparatus according to any one of the foregoing embodiments. The electrochemical apparatus provided by the present application has good safety performance, thereby the electronic apparatus provided by the present application has good safety performance.

The beneficial effects of the present application:

The present application provides an electrochemical apparatus and an electronic apparatus, the electrochemical apparatus includes a wound electrode assembly and an electrolyte, the electrode assembly includes a positive electrode sheet, a negative electrode sheet, and a separator, the separator is provided between the positive electrode sheet and the negative electrode sheet, the positive electrode sheet includes a positive electrode current collector and a positive electrode material layer located on a surface of the positive electrode current collector, and the negative electrode sheet includes a negative electrode current collector and a negative electrode material layer located on a surface of the negative electrode current collector; where the positive electrode current collector is an aluminum foil, a thickness of the positive electrode current collector is Ha µm, a tensile strength of the positive electrode current collector is Ta MPa, the negative electrode current collector is a copper foil, a thickness of the negative electrode current collector is Hc µm, a tensile strength of the negative electrode current collector is Tc MPa, and a conductivity of the electrolyte is S mS/cm, satisfying: 1.6≤Ta×Ha/(Tc×Hc)+0.1S≤3. The present application, by regulating the tensile strength and thickness of the positive and negative current collectors in the electrochemical apparatus, can reduce the probability of burrs appearing on the positive electrode sheet; and by adjusting the components and content of the electrolyte within the range of the present application, can passivate the metal burrs generated by the electrochemical apparatus under the action of external forces, thereby reducing the risk of safety problems caused by metal burrs in the electrochemical apparatus and improving the safety performance of the electrochemical apparatus.

Certainly, implementing any product or method of the present application does not necessarily require achieving all the advantages described above at the same time.

### BRIEF DESCRIPTION OF THE DRAWINGS

To more clearly illustrate the technical solutions in the embodiments of the present application or the prior art, the accompanying drawings necessary for describing the embodiments or the prior art will be briefly introduced below. Obviously, the accompanying drawings in the following description are only some embodiments of the present application. For those of ordinary skill in the art, other embodiments can also be obtained based on these drawings without creative effort.
FIG. 1 is a schematic structural diagram of a positive electrode sheet in some embodiments of the present application; and
FIG. 2 is a schematic structural diagram of a negative electrode sheet in some embodiments of the present application.

Reference signs in the figures: positive electrode sheet, 11; positive electrode material layer, 111; positive electrode current collector, 112; negative electrode sheet, 22; negative electrode material layer, 221; and negative electrode current collector, 222.

### DETAILED DESCRIPTION

The technical solutions in the embodiments of the present application will be clearly and completely described below with reference to the accompanying drawings in the embodiments of the present application. Obviously, the described embodiments are only some embodiments of the present application, rather than all embodiments. Based on the embodiments of the present application, all other embodiments obtained by those of ordinary skill in the art without creative effort belong to the protection scope of the present application.

It should be noted that in the summary of the present application, the present application is explained by taking a lithium-ion battery as an example of the electrochemical apparatus, but the electrochemical apparatus of the present application is not limited to the lithium-ion battery.

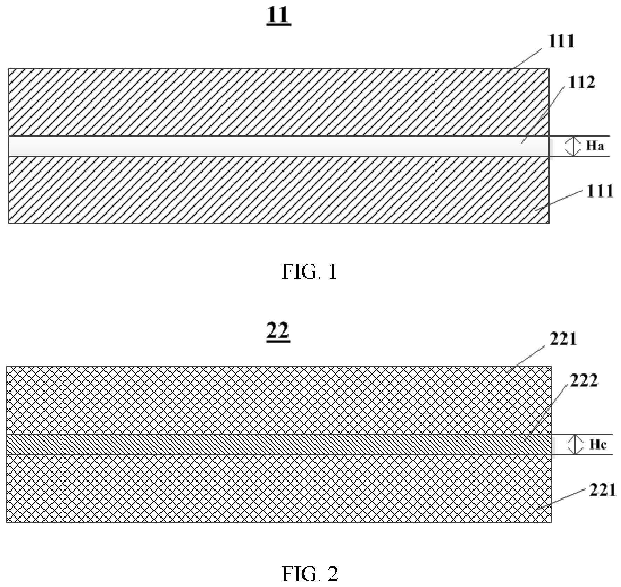

A first aspect of the present application provides an electrochemical apparatus, which includes a wound electrode assembly and an electrolyte, the wound electrode assembly includes a positive electrode sheet, a negative electrode sheet, and a separator, the separator is provided between the positive electrode sheet and the negative electrode sheet, the positive electrode sheet includes a positive electrode current collector and a positive electrode material layer located on a surface of the positive electrode current collector, and the negative electrode sheet includes a negative electrode current collector and a negative electrode material layer located on a surface of the negative electrode current collector. The above "the positive electrode sheet includes a positive electrode current collector and a positive electrode material layer located on a surface of the positive electrode current collector" means that, in some embodiments, the positive electrode sheet includes a positive electrode current collector and a positive electrode material layer located on one surface of the positive electrode current collector. In other embodiments, the positive electrode sheet includes a positive electrode current collector and a positive electrode material layer located on each of two surfaces of the positive electrode current collector. It should be noted that the "surface" here can be the entire surface of the positive electrode current collector or a portion thereof, and the present application does not specifically limit it, as long as the purpose of the present application can be achieved. Referring to FIG. 1, the positive electrode sheet 11 includes a positive electrode current collector 112 and a positive electrode material layer 111 located on each of two surfaces of the positive electrode current collector, the positive electrode current collector 112 is an aluminum foil, a thickness of the positive electrode current collector 112 is Ha µm, and a tensile strength of the positive electrode current collector 112 is Ta MPa; referring to FIG. 2, the negative electrode sheet 22 includes a negative electrode current collector 222 and a negative electrode material layer 221 located on each of two surfaces of the negative electrode current collector, the negative electrode current collector 222 is a copper foil, a thickness of the negative electrode current collector 222 is Hc µm, and a tensile strength of the negative electrode current collector 222 is Tc MPa. A conductivity of the electrolyte is S mS/cm, satisfying: 1.6≤Ta×Ha/(Tc×Hc)+0.1S≤3.

The inventor has studied and found that: when the value of Ta×Ha/(Tc×Hc)+0.1S is too large, the manufacturing cost increases, and at the same time, it is not conducive to improving the energy density of the electrochemical apparatus; when the value of Ta×Ha/(Tc×Hc)+0.1S is too small, the relative thickness and/or relative tensile strength of the positive electrode current collector will correspondingly decrease, and the electrolyte with appropriate conductivity is not matched, this will cause: on the one hand, wrinkling and breaking are likely to occur during the coating of the positive electrode material layer, affecting the manufacturing efficiency of the positive electrode sheet; on the other hand, during the preparation process of the electrochemical apparatus, during the winding and shaping, due to the shaping pressure, the inner circle breakage of the positive electrode sheet is likely to occur, the positive electrode current collector is likely to generate metal burrs, and at the same time, under the action of external forces, the positive electrode current collector of the electrochemical apparatus is likely to generate metal burrs, affecting the safety performance of the electrochemical apparatus. The present application, by regulating that the thickness of the positive electrode current collector, the tensile strength of the positive electrode current collector, the thickness of the negative electrode current collector, the tensile strength of the negative electrode current collector, and the conductivity of the electrolyte satisfy the above relationship, can reduce the possibility of metal burrs generated in the preparation process of the positive electrode sheet; and at the same time, can passivate the metal burrs generated by the electrochemical apparatus under the action of external forces, thereby reducing the risk of safety problems caused by metal burrs in the electrochemical apparatus and improving the safety performance of the electrochemical apparatus. Not limited to any theory, this may be because as the thickness of the positive electrode current collector increases, the deflection degree of the positive electrode current collector also increases accordingly, which can effectively mitigate the phenomenon of wrinkling and breaking, and with the increase of the relative thickness and relative tensile strength of the positive electrode current collector, combined with the use of an electrolyte with appropriate conductivity, the inner circle compression capacity of the electrochemical apparatus during the shaping process is enhanced, reducing the probability of metal burrs generated when the electrochemical apparatus is subjected to external forces. When the above relational expression is satisfied, in the electrochemical apparatus, the electrolyte is effectively adsorbed on the surface of the positive electrode current collector, which is beneficial to reduce the risk of metal burrs piercing the separator under external forces, thereby improving the safety performance of the electrochemical apparatus. Herein, the deflection degree refers to the degree of bending that occurs when an object is subjected to force.

In some embodiments of the present application, a purity of the aluminum foil of the positive electrode current collector is greater than or equal to 99%, 9≤Ha≤20, and 150≤Ta≤300. By regulating the purity of the aluminum foil, and the values of Ha and Ta within the above ranges, while not reducing the volume energy density of the electrochemical apparatus, the possibility of burrs generated in the preparation process of the positive electrode sheet is reduced, thereby improving the safety performance of the electrochemical apparatus. In the present application, the purity of the aluminum foil of the positive electrode current collector refers to the percentage of the mass of aluminum to the mass of the aluminum foil of the positive electrode current collector.

In some embodiments of the present application, a purity of the copper foil of the negative electrode current collector is greater than or equal to 98%, 4≤Hc≤16, and 400≤Tc≤600. By regulating the purity of the copper foil, and the values of Hc and Tc within the above ranges, it is beneficial to reduce the risk of wrinkling and breaking during the preparation process of the negative electrode sheet. In the present application, the purity of the copper foil of the negative electrode current collector refers to the percentage of the mass of copper to the mass of the copper foil of the negative electrode current collector.

In some embodiments of the present application, the electrolyte includes a lithium salt, a non-aqueous organic solvent, and ether nitrile compound. When the electrolyte contains the ether nitrile compound, the ether nitrile compound in the electrolyte interacts with the van der Waals force on the surface of the positive electrode current collector, making it adsorbed on the surface of the positive electrode current collector, which is beneficial to reduce the risk of metal burrs generated under external forces piercing the separator, thereby improving the safety performance of the electrochemical apparatus. Based on a mass of the electrolyte, a mass percentage C of the ether nitrile compound is 0.01% to 8%, and C is preferably 1% to 3%. By regulating the mass percentage C of the ether nitrile compound within the above range, it is beneficial to passivate the new metal burrs generated by the electrochemical apparatus under the action of external forces, while reducing the impact on the cycle performance of the electrochemical apparatus, thereby improving the safety performance of the electrochemical apparatus.

In some embodiments of the present application, the ether nitrile compound includes at least one of ethylene glycol bis(propionitrile) ether, glycerol tris(propionitrile) ether, propylene glycol bis(propionitrile) ether, or polyvinyl alcohol-β-propionitrile ether. By selecting the ether nitrile compound within the above range, it is beneficial to passivate the new metal burrs generated by the electrochemical apparatus under the action of external forces, thereby improving the safety performance of the electrochemical apparatus.

In some embodiments of the present application, the ether nitrile compound content and the current collector satisfy 0.07≤Ha/Ta+0.2C≤1.5. By regulating the value of Ha/Ta+0.2C within the above range, due to the van der Waals force interaction between the electrolyte and the surface of the positive electrode current collector, the ether nitrile compound in the electrolyte is adsorbed on the surface of the positive electrode current collector, which is beneficial to reduce the risk of metal burrs generated under external forces piercing the separator, thereby improving the safety performance of the electrochemical apparatus.

In some embodiments of the present application, the conductivity of the electrolyte is S mS/cm, satisfying 5≤S≤14. By regulating the value of S within the above range, it is beneficial to improve the cycle performance and storage performance of the electrochemical apparatus.

In some embodiments of the present application, a thickness of the positive electrode sheet is 240 µm to 380 µm, and/or a thickness of the negative electrode sheet is 160 µm to 240 µm. By regulating the thickness of the positive electrode sheet and/or the negative electrode sheet within the above range, it is beneficial to improve the energy density of the electrochemical apparatus.

In some embodiments of the present application, the thickness of the negative electrode sheet is less than the thickness of the positive electrode sheet.

In some embodiments of the present application, the positive electrode current collector includes Al, Fe, Si, and Cu, and based on a mass of the positive electrode current collector, a mass percentage W_{Fe} of Fe satisfies 0.1%≤W_{Fe}≤0.5%, a mass percentage W_{Si} of Si satisfies 0.02%≤W_{Si}≤0.35%, and a mass percentage W_{Cu} of Cu satisfies 0.01%≤W_{Cu}≤0.15%. By regulating the mass percentages of Fe, Si, and Cu in the positive electrode current collector within the above ranges, it is beneficial for solid solution strengthening of the positive electrode current collector, which can reduce the possibility of burrs generated in the preparation process of the positive electrode sheet, thereby improving the safety performance of the electrochemical apparatus.

In some embodiments of the present application, in the positive electrode current collector of the present application, in addition to containing Al, Fe, Si, and Cu, it may also contain at least one of Mg, V, Zn, or Ti. Based on the mass of the positive electrode current collector, the mass percentages of Mg, V, Zn, or Ti are each less than or equal to 0.02%.

The present application has no particular limitation on the preparation method of the positive electrode current collector, as long as the purpose of the present application can be achieved, for example, the preparation method of the positive electrode current collector may include but is not limited to the following steps:
Step 1: Certain masses of Al-containing material, Fe-containing material, Si-containing material, and Cu-containing material are respectively weighed and mixed. The present application introduces Al, Fe, Si, and Cu by adding Al-containing material, Fe-containing material, Si-containing material, and Cu-containing material during the preparation process of the positive electrode current collector. For example, the Al-containing material may be elemental aluminum, the Fe-containing material may be elemental iron, the Si-containing material may be elemental silicon, and the Cu-containing material may be elemental copper.
Step 2: The mixed raw materials obtained in step 1 are added into a smelting furnace for smelting, and after the raw materials are completely smelted, the aluminum alloy melt is refined.
Step 3: The smelted aluminum alloy melt is filtered at 700°C to 750°C using a ceramic filter, and after filtering, is injected into a casting and rolling machine for continuous rolling to obtain a cast-rolled plate with a required thickness of 4 mm to 6 mm.
Step 4: The cast-rolled plate is rolled into a cold-rolled plate. When rolled to a thickness of 1.3 mm to 1.5 mm, annealing treatment is performed, the annealing temperature is 350°C to 400°C, and the holding time is 2 h to 4 h.
Step 5: Multiple rounds of finish rolling is performed on the cold-rolled plate obtained in step 4 to obtain an aluminum foil with a thickness of 9 µm to 20 µm.

The present application may design a corresponding raw material formula according to the required tensile strength of the positive electrode current collector. The present application has no particular limitation on the smelting temperature, as long as the purpose of the present application can be achieved. The present application has no particular limitation on the refining temperature, as long as the purpose of the present application can be achieved. The present application has no particular limitation on the number of finish rolling times, and finish rolling may be performed according to the thickness of the aluminum foil actually required. The inventor has studied and found that adding trace amounts of Fe, Si, and Cu to the raw materials is beneficial for producing a solid solution strengthening effect on the positive electrode current collector. The inventor has also found that increasing the value of W_{Fe}/W_{Si} and the value of W_{Cu} is beneficial for obtaining a positive electrode current collector with higher tensile strength. Based on this, the present application may regulate the tensile strength of the positive electrode current collector by regulating the value of W_{Fe}/W_{Si} and the value of W_{Cu}.

In the present application, there is a positive correlation between the thickness of the positive electrode current collector and its tensile strength. Based on this, the tensile strength thereof may be regulated by regulating the thickness of the positive electrode current collector.

The present application has no particular limitation on the method of regulating the purity of the positive electrode current collector aluminum foil, as long as the purpose of the present application can be achieved. For example, the purity of the positive electrode current collector aluminum foil may be regulated by regulating the percentage of aluminum in the mixed raw materials.

The positive electrode sheet in the present application includes a positive electrode current collector and a positive electrode material layer, the positive electrode material layer includes a positive electrode active material, and the present application has no particular limitation on the type of the positive electrode active material, as long as the purpose of the present application can be achieved. For example, the positive electrode active material may include at least one of lithium nickel cobalt manganese oxide (NCM811, NCM622, NCM523, or NCM111), lithium nickel cobalt aluminum oxide, lithium iron phosphate (LFP), lithium-rich manganese-based material, lithium cobalt oxide (LiCoO₂), lithium manganese oxide (LMO), lithium manganese iron phosphate, or lithium titanate. In the present application, the positive electrode active material may further include a non-metal element, for example, the non-metal element includes at least one of fluorine, phosphorus, boron, chlorine, silicon, or sulfur, and these elements can further improve the stability of the positive electrode active material. Optionally, the positive electrode material layer may further include a conductive agent and a binder. The present application has no particular limitation on the type of the binder in the positive electrode material layer, as long as the purpose of the present application can be achieved, for example, the binder may include but is not limited to at least one of polyvinylidene fluoride (PVDF), a copolymer of vinylidene fluoride-hexafluoropropylene, polyamide, polyacrylonitrile, polyacrylate, polyacrylic acid, polyacrylate salt, polyvinylpyrrolidone, polyvinyl ether, polymethyl methacrylate, polytetrafluoroethylene, or polyhexafluoropropylene. The present application has no particular limitation on the type of the conductive agent in the positive electrode material layer, as long as the purpose of the present application can be achieved, for example, the conductive agent may include but is not limited to at least one of conductive carbon black (Super P), carbon nanotubes (CNTs), carbon fibers, flake graphite, Ketjenblack, graphene, a metal material, or a conductive polymer. The above carbon nanotubes may include but are not limited to single-walled carbon nanotubes and/or multi-walled carbon nanotubes. The above carbon fibers may include but are not limited to vapor-grown carbon fibers (VGCF) and/or nanocarbon fibers. The above metal material may include but is not limited to metal powder and/or metal fibers, specifically, the metal may include but is not limited to at least one of copper, nickel, aluminum, or silver. The above conductive polymer may include but is not limited to at least one of polyphenyl derivatives, polyaniline, polythiophene, polyacetylene, or polypyrrole. The present application has no particular limitation on the mass ratio of the positive electrode active material, the conductive agent, and the binder in the positive electrode material layer, and those skilled in the art may select it according to actual needs, as long as the purpose of the present application can be achieved.

The present application has no particular limitation on the preparation method of the negative electrode current collector, as long as the purpose of the present application can be achieved, for example, the preparation method of the negative electrode current collector may include but is not limited to the following steps:
Step 1: High-purity copper wire is heated and dissolved in a dissolution tank to generate a copper sulfate electrolyte.
Step 2: The generated copper sulfate electrolyte is filtered and poured into a high-level tank, an additive is added to the high-level tank, and the obtained mixture is sent to a foil-making machine for electrolytic foil production.
Step 3: The foil sheet obtained in step 2 is treated with an anti-oxidation solution to obtain a copper foil with a thickness of 4 µm to 16 µm.

The present application has no particular limitation on the purity of the copper wire, as long as the purpose of the present application can be achieved. For example, the purity of the copper wire is greater than or equal to 98%. The present application has no particular limitation on the heating temperature of the dissolution tank, as long as the purpose of the present application can be achieved. For example, the heating temperature may be 25°C to 100°C. The present application has no particular limitation on the type of the additive, as long as the purpose of the present application can be achieved. For example, the additive may be a grain refiner, including at least one of aqueous solutions of polyethyleneimine derivatives, sodium 3-mercaptopropane sulfonate, polyethylene glycol, or ethylene thiourea. The present application has no particular limitation on the anti-oxidation solution, as long as the purpose of the present application can be achieved. For example, the anti-oxidation solution is an aqueous solution including glucose, benzotriazole, and a silane coupling agent (pH=2 to 3). Wherein, the concentration of glucose is 2.4 g/L to 3.66 g/L, the concentration of benzotriazole is 0.8 g/L to 1.2 g/L, and the concentration of the silane coupling agent is 0.003 L/L to 0.008 L/L. The silane coupling agent may be a silane coupling agent known in the art, as long as the purpose of the present application can be achieved. The present application has no particular limitation on the method of regulating the purity of the negative electrode current collector copper foil, as long as the purpose of the present application can be achieved. For example, the purity of the negative electrode current collector copper foil may be adjusted by adjusting the purity of the copper wire added during the preparation process of the negative electrode current collector.

The negative electrode sheet in the present application includes a negative electrode current collector and a negative electrode material layer, the negative electrode material layer includes a negative electrode active material, and the present application has no particular limitation on the type of the negative electrode active material, as long as the purpose of the present application can be achieved. For example, the negative electrode active material may include at least one of natural graphite, artificial graphite, mesocarbon microbeads (MCMB), hard carbon, soft carbon, silicon, silicon-carbon composite, SiOₓ (0<x<2), Li-Sn alloy, Li-Sn-O alloy, Sn, SnO, SnO₂, spinel-structured lithium titanate Li₄Ti₅O₁₂, Li-Al alloy, or metallic lithium. Optionally, the negative electrode active material layer may further include at least one of a conductive agent, a stabilizer, or a binder. The present application has no particular limitation on the types of the conductive agent, the stabilizer, and the binder in the negative electrode material layer, as long as the purpose of the present application can be achieved. The present application has no particular limitation on the mass ratio of the negative electrode active material, the conductive agent, the stabilizer, and the binder in the negative electrode material layer, as long as the purpose of the present application can be achieved.

The present application has no particular limitation on the separator, as long as the purpose of the present application can be achieved, for example, it may include but is not limited to at least one of a polyolefin (PO)-based separator mainly composed of polyethylene (PE), polypropylene (PP), polytetrafluoroethylene, a polyester film (for example, polyethylene terephthalate (PET) film), a cellulose film, a polyimide film (PI), a polyamide film (PA), spandex, aramid film, a woven film, a non-woven film (non-woven fabric), a microporous film, a composite film, separator paper, a calendered film, or a spun film, preferably PP. The separator of the present application may have a porous structure, and the size of the pore diameter has no particular limitation, as long as the purpose of the present application can be achieved. For example, the size of the pore diameter may be 0.01 µm to 1 µm. In the present application, the thickness of the separator has no particular limitation, as long as the purpose of the present application can be achieved, for example, the thickness may be 5 µm to 500 µm.

For example, the separator may include a substrate layer and a surface treatment layer. The substrate layer may be a non-woven fabric, a film, or a composite film having a porous structure, and the material of the substrate layer may include but is not limited to at least one of polyethylene, polypropylene, polyethylene terephthalate, or polyimide. Optionally, a polypropylene porous film, a polyethylene porous film, a polypropylene non-woven fabric, a polyethylene non-woven fabric, or a polypropylene-polyethylene-polypropylene porous composite film may be used. Optionally, a surface treatment layer is provided on at least one surface of the substrate layer, and the surface treatment layer may be a polymer layer or an inorganic layer, or may be a layer formed by mixing a polymer and an inorganic material.

The inorganic layer may include but is not limited to inorganic particles and an inorganic layer binder, and the present application has no particular limitation on the inorganic particles, as long as the purpose of the present application can be achieved. For example, the inorganic particles may include but is not limited to at least one of alumina, silica, magnesia, titania, hafnia, stannia, ceria, nickel oxide, zinc oxide, calcium oxide, zirconia, yttria, silicon carbide, boehmite, aluminum hydroxide, magnesium hydroxide, calcium hydroxide, or barium sulfate. The present application has no particular limitation on the inorganic layer binder, for example, it may include but is not limited to at least one of polyvinylidene fluoride, a copolymer of vinylidene fluoride-hexafluoropropylene, polyamide, polyacrylonitrile, polyacrylate, polyacrylic acid, polyacrylate salt, polyvinylpyrrolidone, polyvinyl ether, polymethyl methacrylate, polytetrafluoroethylene, or polyhexafluoropropylene. The polymer layer includes a polymer, and the material of the polymer may include but is not limited to at least one of polyamide, polyacrylonitrile, acrylate polymer, polyacrylic acid, polyacrylate salt, polyvinylpyrrolidone, polyvinyl ether, polyvinylidene fluoride, or polyvinylidene fluoride-hexafluoropropylene.

In the present application, the lithium salt may include at least one of LiPF₆, LiBF₄, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bis(oxalato)borate (LiBOB), or lithium difluoroborate. The present application has no particular limitation on the concentration of the lithium salt in the electrolyte, as long as the purpose of the present application can be achieved. For example, the mass percentage of the lithium salt in the electrolyte is 8% to 15%. The present application has no particular limitation on the non-aqueous solvent, as long as the purpose of the present application can be achieved. For example, it may include but is not limited to at least one of a carbonate compound, a carboxylate compound, an ether compound, or other organic solvents. The above carbonate compound may include but is not limited to at least one of a chain carbonate compound, a cyclic carbonate compound, or a fluorinated carbonate compound. The above chain carbonate compound may include but is not limited to at least one of dimethyl carbonate (DMC), diethyl carbonate (DEC), dipropyl carbonate (DPC), methyl propyl carbonate (MPC), ethyl propyl carbonate (EPC), or methyl ethyl carbonate (MEC). The above cyclic carbonate may include but is not limited to at least one of ethylene carbonate (EC), propylene carbonate (PC), butylene carbonate (BC), or vinylene ethylene carbonate (VEC). The fluorinated carbonate compound may include but is not limited to at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene carbonate, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. The above carboxylate compound may include but is not limited to at least one of methyl formate, methyl acetate, ethyl acetate, n-propyl acetate, tert-butyl acetate, methyl propionate, ethyl propionate, propyl propionate, γ-butyrolactone, decanolactone, valerolactone, or caprolactone. The above ether compound may include but is not limited to at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The above other organic solvents may include but are not limited to at least one of dimethyl sulfoxide, 1,2-dioxolane, sulfolane, methylsulfolane, 1,3-dimethyl-2-imidazolidinone, N-methyl-2-pyrrolidone, dimethylformamide, acetonitrile, trimethyl phosphate, triethyl phosphate, or trioctyl phosphate. The present application has no particular limitation on the content of the non-aqueous solvent in the electrolyte, as long as the purpose of the present application can be achieved. Wherein, the mass percentage of the non-aqueous solvent = 100% - mass percentage of the lithium salt - mass percentage of the ether nitrile compound. The electrochemical apparatus of the present application has no particular limitation, and it may include any apparatus in which an electrochemical reaction occurs. In one embodiment of the present application, the electrochemical apparatus may include but is not limited to a lithium-ion secondary battery (lithium-ion battery), a lithium polymer secondary battery, or a lithium-ion polymer secondary battery, and the like.

The preparation process of the electrochemical apparatus of the present application is well known to those skilled in the art, and the present application has no particular limitation, for example, it may include but is not limited to the following steps: stacking the positive electrode sheet, the separator, and the negative electrode sheet in sequence, and performing operations such as winding or folding as needed to obtain an electrode assembly with a wound structure, placing the electrode assembly into a packaging bag, injecting the electrolyte into the packaging bag and sealing it to obtain the electrochemical apparatus. In addition, an overcurrent prevention element, a conductive plate, and the like may also be placed in the packaging bag as needed, thereby preventing an increase in the internal pressure of the electrochemical apparatus as well as overcharging and discharging. The present application has no limitation on the packaging bag, and those skilled in the art may select it according to actual needs, as long as the purpose of the present application can be achieved. For example, an aluminum-plastic film packaging bag may be used.

A second aspect of the present application provides an electronic apparatus, which includes the electrochemical apparatus in any one of the foregoing embodiments. The electrochemical apparatus provided by the present application has good safety performance, thereby the electronic apparatus provided by the present application has good safety performance.

The electronic apparatus of the present application is not particularly limited, and it may be any electronic apparatus known in the prior art. For example, the electronic apparatus may include but is not limited to a notebook computer, a pen-input computer, a mobile computer, an e-book player, a portable telephone, a portable fax machine, a portable copier, a portable printer, a headphone stereo, a video recorder, a liquid crystal television, a portable cleaner, a portable CD player, a mini disc, a transceiver, an electronic notebook, a calculator, a memory card, a portable recorder, a radio, a backup power supply, a motor, an automobile, a motorcycle, an electric-assisted bicycle, a bicycle, a lighting fixture, a toy, a game console, a clock, an electric tool, a flash, a camera, a household large-capacity battery, and a lithium-ion capacitor.

### Examples

Hereinafter, the embodiments of the present application will be described more specifically with reference to examples and comparative examples. Various tests and evaluations are performed according to the following methods.

### Test methods and equipment:

### Conductivity S test of the electrolyte:

Instrument calibration: The standard solution was poured into a dry and clean centrifuge tube and placed in a 25°C constant temperature bath for 30 min. Dust-free paper was used to absorb moisture from the electrode, and the electrode was then placed into the standard solution for testing. The instrument reading was maintained at the conductivity value of the standard solution, and three tests were performed. The electrode was then rinsed with pure water and stored in pure water. The standard solution was 0.1 mol/L potassium chloride solution.

Electrolyte testing: The electrolyte to be tested was poured into a dry and clean centrifuge tube and placed in a 25°C constant temperature bath for 30 min. The electrode with moisture removed was placed vertically into the sample to be tested, and the measurement range was adjusted according to the conductivity of the electrolyte to be tested. The electrode was shaken, and data were recorded after stabilization. Three tests were performed, and the data were recorded and averaged.

### Positive electrode current collector thickness Ha and tensile strength Ta test:

Thickness: A spiral micrometer was used to measure the thickness Ha of the positive electrode current collector in each example and comparative example. Twelve different positions were selected on each group of positive electrode current collectors, and the thicknesses of the positive electrode current collectors at different positions were measured using a spiral micrometer. The value of Ha was calculated as the average value of the corresponding positive electrode current collector thicknesses at the 12 different positions.

Tensile strength: The positive electrode current collectors in each example and comparative example were cut into samples with a length of 60 mm and a width of 15 mm. A high-speed tensile testing machine was used for testing, where the positive electrode current collector was positioned parallel to the clamps along the length direction and the sample was kept linear. The clamp gauge distance was set to 50 mm, and the samples were stretched uniformly at a speed of 5 mm/min until fracture occurred and the data were recorded. Five parallel samples were tested for each group of positive electrode current collectors, and the minimum value was used as the tensile strength Ta of the samples.

### Negative electrode current collector thickness Hc and tensile strength Tc test:

Thickness: A spiral micrometer was used to measure the thickness Hc of the negative electrode current collector in each example and comparative example. Twelve different positions were selected on each group of negative electrode current collectors, and the thicknesses of the negative electrode current collectors at different positions were measured using a spiral micrometer. The value of Hc was calculated as the average value of the corresponding negative electrode current collector thicknesses at the 12 different positions.

Tensile strength: The negative electrode current collectors in each example and comparative example were cut into samples with a length of 60 mm and a width of 15 mm. A high-speed tensile testing machine was used for testing, where the negative electrode current collector was positioned parallel to the clamps along the length direction and the sample was kept linear. The clamp gauge distance was set to 50 mm, and the samples were stretched uniformly at a speed of 5 mm/min until fracture occurred and the data were recorded. Five parallel samples were tested for each group of negative electrode current collectors, and the minimum value was used as the tensile strength Tc of the samples.

### Current collector purity test:

Inductively coupled plasma optical emission spectrometry was used to determine the mass percentage of aluminum in the positive electrode current collector.

Inductively coupled plasma optical emission spectrometry was used to determine the mass percentage of copper in the negative electrode current collector.

### Test of Fe, Si, and Cu percentages in the positive electrode current collector:

Inductively coupled plasma optical emission spectrometry was used to determine the mass percentages of Fe, Si, and Cu in the positive electrode current collector.

### Squeeze test:

The lithium-ion batteries of each example and comparative example were fully charged to 4.2 V at a rate of 0.5 C and allowed to stand for 5 min. In a test environment of 20±5°C, the lithium-ion battery was placed between two flat plates with the wide surface of the sample parallel to the two flat plates. A squeeze pressure of 13±0.78 kN was applied, and the test was stopped when the applied pressure reached the set squeeze pressure value or when the lithium-ion battery produced smoke or caught fire. Ten parallel samples were tested for each group, and the percentage of lithium-ion batteries that did not catch fire or explode in each group relative to the total number of test samples in each group was recorded.

### Impact test:

After the lithium-ion batteries of each example and comparative example were fully charged at a charging rate of 0.5 C, they were allowed to stand in open circuit for 2 h. According to the provisions of Section 7.7 of the national standard GB31241-2014, a metal rod with a length of 15.8 mm±0.2 mm was placed horizontally on the upper surface of the geometric center of the lithium-ion battery. A mass of 9.1 kg±0.1 kg was freely dropped from a height of 610 mm±25 mm to impact the surface of the lithium-ion battery with the metal rod placed, and the battery was observed for 6 h. The battery should not leak liquid, catch fire, or explode, otherwise the battery was considered to have failed the test. The appearance was checked and photographs were taken before and after the test. Ten parallel samples were tested for each group, and the percentage of lithium-ion batteries that did not leak liquid, catch fire, or explode in each group relative to the total number of test samples in each group was recorded.

### Cycle performance test:

At a test temperature of 45°C, the lithium-ion batteries of each example and comparative example were charged to 4.2 V with a constant current of 0.5 C, then charged with a constant voltage of 4.2 V to 1 C and allowed to stand for 5 min, and then discharged to 2.8 V with 0.5 C. This constituted one charge-discharge cycle process, and the discharge capacity of the lithium-ion battery in the first cycle was recorded. The above cycle process was then repeated for charge-discharge cycles, and the number of cycles when the capacity retention rate of the lithium-ion battery dropped to 80% was recorded. Ten lithium-ion batteries were taken for each group, and the average value of the number of cycles when the capacity retention rate of the lithium-ion batteries dropped to 80% was calculated as the number of cycles for each group.

### Example 1-1

### <Preparation of positive electrode current collector>

Elemental aluminum, elemental iron, elemental silicon, and elemental copper were mixed in a mass ratio of 99.62:0.25:0.05:0.08. The above mixed raw materials were added to a smelting furnace for smelting, and after the raw materials were completely smelted, the aluminum alloy melt was refined, where the smelting temperature was 760°C and the refining temperature was 730°C. The smelted aluminum alloy melt was filtered at 700°C using a ceramic filter, and after filtering, was injected into a casting and rolling machine for continuous rolling to obtain a cast-rolled plate with a thickness of 4 mm. The cast-rolled plate was rolled into a cold-rolled plate. When rolled to a thickness of 1.4 mm, annealing treatment was performed at an annealing temperature of 360°C with a holding time of 2 h. The above obtained cold-rolled plate was finish rolled to obtain a positive electrode current collector aluminum foil with a thickness of 15 µm, and the purity of the positive electrode current collector aluminum foil was 99%.

### <Preparation of positive electrode sheet>

The positive electrode active materials lithium manganese oxide and lithium iron phosphate (LMO:LFP=9: 1), conductive agent nano conductive carbon black, conductive carbon slurry, and binder polyvinylidene fluoride (PVDF) were mixed in a mass ratio of 96:1.0:1.0:2.0. N-methylpyrrolidone (NMP) was added as a solvent to prepare a slurry with a solid content of 70%, and the slurry was stirred to uniformity. The slurry was uniformly applied on one surface of a positive electrode current collector aluminum foil with a thickness of 15 µm and dried at 125°C to obtain a positive electrode sheet with single-sided coating of positive electrode active material. After the above steps were completed, the single-sided coating of the positive electrode sheet was completed. Then, the above steps were repeated on another surface of the positive electrode current collector aluminum foil to obtain a positive electrode sheet with double-sided coating of positive electrode active material. After coating, cold pressing was performed, and the obtained positive electrode sheet had a thickness of 300 µm. The cold-pressed positive electrode sheet was cut for later use.

### <Preparation of negative electrode current collector>

High-purity copper wire with a purity of 99% was dissolved in 105 g/L sulfuric acid solution by heating to 55°C in a dissolution tank to generate a copper sulfate electrolyte. The generated copper sulfate electrolyte was filtered and poured into a high-level tank, an additive sodium 3-mercaptopropane sulfonate was added to the high-level tank, and the mixture was sent to a foil-making machine for electrolytic foil production. The prepared copper foil was treated with an anti-oxidation solution (pH=2) and dried in a 20°C oven to obtain an electrolytic finished copper foil, and the purity of the negative electrode current collector copper foil was 99%. The concentration of copper ions in the copper sulfate electrolyte was 100 g/L, the anti-oxidation solution was an aqueous solution including glucose, benzotriazole, and a silane coupling agent, the concentration of glucose was 3 g/L, the concentration of benzotriazole was 1 g/L, the silane coupling agent was methyltrichlorosilane with a concentration of 0.005 L/L, and the thickness of the copper foil was 10 µm.

### <Preparation of negative electrode sheet>

The negative electrode active material artificial graphite, conductive agent conductive carbon black (Super P), and binder styrene-butadiene rubber (SBR) were mixed in a mass ratio of 96:1.5:2.5. Deionized water was then added as a solvent to prepare a slurry with a solid content of 50%, and the slurry was stirred to uniformity. The slurry was uniformly applied on one surface of a negative electrode current collector copper foil with a thickness of 10 µm and dried at 110°C to obtain a negative electrode sheet with single-sided coating of negative electrode active material. After the above steps were completed, the single-sided coating of the negative electrode sheet was completed. Then, the above steps were repeated on another surface of the negative electrode current collector copper foil to obtain a negative electrode sheet with double-sided coating of negative electrode active material. After coating, cold pressing was performed, and the obtained negative electrode sheet had a thickness of 190 µm. The cold-pressed negative electrode sheet was cut for later use.

### <Preparation of electrolyte>

In a dry argon atmosphere, the organic solvents ethylene carbonate (EC), ethyl methyl carbonate (EMC), diethyl carbonate (DEC), and the ether nitrile compound ethylene glycol bis(propionitrile) ether were mixed in a mass ratio of 3:2.1:1.5:0.1 to obtain an organic solution. The lithium salt lithium hexafluorophosphate was then added to the organic solvent and dissolved and mixed uniformly to obtain the electrolyte. Based on the mass of the electrolyte, the mass percentage C of the ether nitrile compound was 1%, the mass percentage of the lithium salt was 12.5%, and the balance was the organic solvent.

### <Preparation of separator>

A porous polyethylene (PE) porous film with a thickness of 7 µm (provided by Celgard company) was used.

### <Preparation of lithium-ion battery>

The negative electrode sheet, separator, and positive electrode sheet prepared above were stacked and wound in sequence to obtain an electrode assembly with a wound structure. The electrode assembly was placed in an aluminum-plastic film packaging bag and dried, then the electrolyte was injected, and after processes such as vacuum packaging, standing, formation, degassing, and trimming, a lithium-ion battery was obtained.

### Examples 1-2 to 1-4

Except that in <Preparation of negative electrode current collector> and <Preparation of electrolyte>, Hc, Tc, S, and C are adjusted according to Table 1, the rest are the same as Example 1-1. Wherein, when the mass percentage C of the ether nitrile compound changes, the mass percentage of the organic solvent changes accordingly, and the mass percentage of the lithium salt remains unchanged.

### Examples 1-5 to 1-10

Except that in <Preparation of positive electrode current collector>, <Preparation of negative electrode current collector>, <Preparation of electrolyte>, Ha, Ta, Hc, Tc, S, W_{Fe}, W_{Si}, W_{Cu}, and C are adjusted according to Table 1, the rest are the same as Example 1-1. Wherein, when the mass percentage C of the ether nitrile compound changes, the mass percentage of the organic solvent changes accordingly, and the mass percentage of the lithium salt remains unchanged. When the mass percentages of W_{Fe}, W_{Si}, W_{Cu} change, the mass percentage of the positive electrode current collector aluminum foil changes accordingly.

### Examples 2-1 to 2-3

Except that in <Preparation of electrolyte>, the type of the ether nitrile compound is adjusted according to Table 2, the rest are the same as Example 1-8.

### Examples 3-1 and 3-2

Except that in <Preparation of positive electrode current collector>, <Preparation of negative electrode current collector>, Ha and Hc are adjusted according to Table 3, the rest are the same as Example 1-8. Wherein, when Ha and Hc change, the thicknesses of the positive electrode material layer and the negative electrode material layer change accordingly, and the thicknesses of the positive electrode sheet and the negative electrode sheet remain unchanged.

### Examples 3-3 and 3-4

Except that in <Preparation of positive electrode sheet> and <Preparation of negative electrode sheet>, the thickness of the positive electrode sheet and the thickness of the negative electrode sheet are adjusted according to Table 3, the rest are the same as Example 1-8. In this case, when the thicknesses of the positive electrode sheet and the negative electrode sheet change, the thicknesses of the positive electrode material layer and the negative electrode material layer change accordingly, and Ha and Hc remain unchanged.

### Comparative Examples 1 and 2

Except that in <Preparation of positive electrode current collector>, <Preparation of negative electrode current collector>, and <Preparation of electrolyte>, Ha, Ta, Hc, Tc, S, W_{Fe}, W_{Si}, W_{Cu}, and C are adjusted according to Table 1, the rest are the same as Example 1-1. Wherein, when the mass percentage C of the ether nitrile compound changes, the mass percentage of the organic solvent changes accordingly, and the mass percentage of the lithium salt remains unchanged.

### Comparative Example 3

Except that in <Preparation of positive electrode current collector>, <Preparation of negative electrode current collector>, and <Preparation of electrolyte>, Ha, Ta, Hc, Tc, S, W_{Fe}, W_{Si}, and W_{Cu} are adjusted according to Table 1, and the electrolyte does not include the ether nitrile compound, the rest are the same as Example 1-1.

The preparation parameters and performance parameters of each example and comparative example are shown in Tables 1 to 3.

**Table 1**

| | Ha (µm) | Ta (MPa) | He (µm) | Tc (MPa) | C (%) | S (mS/cm) | Ta×Ha/(Tc×Hc) +0.1S | Ha/Ta+0.2C | WFe (%) | W_{Si} (%) | W_{Cu} (%) | Squeeze test pass rate(%) | Impact test pass rate(%) | 45°C cycling test(cycles) |
|---|---|---|---|---|---|---|---|---|---|---|---|---|---|---|
| Example 1-1 | 15 | 240 | 10 | 500 | 1 | 11 | 1.82 | 0.26 | 0.25 | 0.05 | 0.08 | 100 | 100 | 421 |
| Example 1-2 | 15 | 240 | 12 | 520 | 0.5 | 12 | 1.78 | 0.16 | 0.25 | 0.05 | 0.08 | 100 | 100 | 415 |
| Example 1-3 | 15 | 240 | 8 | 470 | 0.02 | 14 | 2.36 | 0.07 | 0.25 | 0.05 | 0.08 | 100 | 100 | 403 |
| Example 1-4 | 15 | 240 | 6 | 460 | 8 | 5 | 1.80 | 1.67 | 0.25 | 0.05 | 0.08 | 100 | 100 | 354 |
| Example 1-5 | 20 | 300 | 6 | 460 | 5.5 | 8 | 2.97 | 1.17 | 0.4 | 0.12 | 0.1 | 100 | 100 | 381 |
| Example 1-6 | 20 | 300 | 8 | 470 | 0.02 | 14 | 3.00 | 0.07 | 0.4 | 0.12 | 0.1 | 100 | 100 | 402 |
| Example 1-7 | 20 | 300 | 16 | 600 | 1 | 11 | 1.73 | 0.27 | 0.4 | 0.12 | 0.1 | 100 | 100 | 421 |
| Example 1-8 | 18 | 280 | 15 | 560 | 2 | 10 | 1.60 | 0.46 | 0.4 | 0.13 | 0.05 | 100 | 100 | 506 |
| Example 1-9 | 13 | 220 | 4 | 400 | 4.3 | 9 | 2.69 | 0.92 | 0.12 | 0.06 | 0.05 | 95 | 100 | 432 |
| Example 1-10 | 9 | 150 | 5 | 420 | 0.5 | 12 | 1.84 | 0.16 | 0.5 | 0.3 | 0.04 | 90 | 100 | 414 |
| Comparative Example 1 | 22 | 340 | 6 | 460 | 9 | 4 | 3.11 | 1.86 | 0.35 | 0.12 | 0.1 | 100 | 100 | 50 |
| Comparative Example 2 | 8 | 140 | 18 | 660 | 0.02 | 14 | 1.49 | 0.06 | 0.5 | 0.04 | 0.01 | 0 | 0 | 342 |
| Comparative Example 3 | 15 | 240 | 5 | 420 | / | 15 | 3.21 | 0.06 | 0.25 | 0.05 | 0.08 | 0 | 90 | 181 |

| | | | | | | | | | | | | | | |
|---|---|---|---|---|---|---|---|---|---|---|---|---|---|---|
| Note: The "/" in Table 1 indicates no corresponding preparation parameter. | | | | | | | | | | | | | | |

Referring to Table 1, from Examples 1-1 to 1-10 and Comparative Examples 1 to 3, it can be seen that the pass rates of the squeeze test and impact test of the lithium-ion batteries in the embodiments of the present application are significantly improved, and at the same time, the number of cycles under the 45°C cycling test is relatively high. This may be because, by regulating Ta×Ha/(Tc×Hc)+0.1S within the range of the present application, the risk of safety problems caused by metal burrs in the electrochemical apparatus can be reduced, which is beneficial to improve the safety performance and cycle performance of the lithium-ion battery.

From Examples 1-1 to 1-10, it can be seen that Ta increases with an increase in Ha, and Tc increases with an increase in Hc, indicating a positive correlation between the thickness and tensile strength for the positive electrode current collector and the negative electrode current collector. When the mass percentage C of the ether nitrile compound and Ha/Ta+0.2C are within the range of the present application, it is beneficial to obtain a lithium-ion battery with excellent safety performance and cycle performance.

**Table 2**

| | Type of ether nitrile compound | Mass percentage of ether nitrile compound(%) | Squeeze test pass rate(%) | Impact test pass rate(%) | 45°C cycling test (cycles) |
|---|---|---|---|---|---|
| Example 1-8 | Ethylene glycol bis(propionitrile) ether | 2 | 100 | 100 | 506 |
| Example 2-1 | Glycerol tris(propionitrile) ether | 2 | 100 | 90 | 472 |
| Example 2-2 | Propylene glycol bis(propionitrile) ether | 2 | 80 | 100 | 449 |
| Example 2-3 | Ethylene glycol bis(propionitrile) ether + Glycerol tris(propionitrile) ether | 1+1 | 95 | 100 | 480 |

The type of ether nitrile compound in the electrolyte usually also affects the performance of the lithium-ion battery. Referring to Table 2, from Example 1-8 and Examples 2-1 to 2-3, it can be seen that by regulating the type of the ether nitrile compound in the electrolyte within the range of the present application, it is beneficial to obtain a lithium-ion battery with excellent safety performance and cycle performance.

**Table 3**

| | Ha(µm) | Hc(µm) | Thickness of positive electrode sheet (µm) | Thickness of negative electrode sheet (µm) | Squeeze test pass rate(%) | Impact test pass rate(%) | 45°C cycling test (cycles) |
|---|---|---|---|---|---|---|---|
| Example 1-8 | 18 | 15 | 300 | 190 | 100 | 100 | 506 |
| Example 3-1 | 13 | 5 | 300 | 190 | 80 | 90 | 504 |
| Example 3-2 | 8 | 4 | 300 | 190 | 50 | 80 | 504 |
| Example 3-3 | 18 | 15 | 260 | 160 | 100 | 100 | 508 |
| Example 3-4 | 18 | 15 | 380 | 240 | 70 | 90 | 497 |

The thickness of the positive electrode current collector aluminum foil, the thickness of the negative electrode current collector copper foil, the thickness of the positive electrode sheet, and the thickness of the negative electrode sheet usually also affect the performance of the lithium-ion battery. Referring to Table 3, from Example 1-8 and Examples 3-1 to 3-4, it can be seen that by regulating the above parameters within the range of the present application, it is beneficial to obtain a lithium-ion battery with excellent safety performance.

It should be noted that, in this context, the terms "include", "contain" or any other variant thereof are intended to cover non-exclusive inclusions, such that a process, method, or article of manufacture that includes a series of elements not only includes those elements, but also includes other elements not expressly listed, or also includes elements inherent to such process, method, or article of manufacture.

The various embodiments in this specification are described in a related manner, and the same or similar parts between the various embodiments can be referred to each other, and each embodiment focuses on the differences from other embodiments.

The above descriptions are only preferred embodiments of the present application and are not intended to limit the protection scope of the present application. Any modifications, equivalent replacements, improvements, and the like, made within the spirit and principles of the present application shall be included in the protection scope of the present application.

## Claims

1. An electrochemical apparatus comprising a wound electrode assembly and an electrolyte, the wound electrode assembly comprising a positive electrode sheet, a negative electrode sheet, and a separator, the separator being provided between the positive electrode sheet and the negative electrode sheet, the positive electrode sheet comprising a positive electrode current collector and a positive electrode material layer located on a surface of the positive electrode current collector, and the negative electrode sheet comprising a negative electrode current collector and a negative electrode material layer located on a surface of the negative electrode current collector; wherein the positive electrode current collector is an aluminum foil, a thickness of the positive electrode current collector is Ha µm, a tensile strength of the positive electrode current collector is Ta MPa, the negative electrode current collector is a copper foil, a thickness of the negative electrode current collector is Hc µm, a tensile strength of the negative electrode current collector is Tc MPa, and a conductivity of the electrolyte is S mS/cm, satisfying: 1.6≤Ta×Ha/(Tc×Hc)+0.1S≤3.

2. The electrochemical apparatus according to claim 1, wherein a purity of the aluminum foil of the positive electrode current collector is greater than or equal to 99%, 9≤Ha≤20, and 150≤Ta≤300.

3. The electrochemical apparatus according to claim 1, wherein a purity of the copper foil of the negative electrode current collector is greater than or equal to 98%, 4≤Hc≤16, and 400≤Tc≤600.

4. The electrochemical apparatus according to claim 1, wherein the electrolyte comprises a lithium salt, a non-aqueous organic solvent, and an ether nitrile compound, and based on a mass of the electrolyte, a mass percentage C of the ether nitrile compound is 0.01% to 8%.

5. The electrochemical apparatus according to claim 4, wherein the mass percentage C of the ether nitrile compound is 1% to 3%.

6. The electrochemical apparatus according to claim 4, wherein the ether nitrile compound comprises at least one of ethylene glycol bis(propionitrile) ether, glycerol tris(propionitrile) ether, propylene glycol bis(propionitrile) ether, or polyvinyl alcohol-β-propionitrile ether.

7. The electrochemical apparatus according to claim 4, wherein the ether nitrile compound and the current collector satisfy: 0.07≤Ha/Ta+0.2C≤1.5.

8. The electrochemical apparatus according to claim 1, wherein 5≤S≤14.

9. The electrochemical apparatus according to claim 1, wherein a thickness of the positive electrode sheet is 240 µm to 380 µm, and/or a thickness of the negative electrode sheet is 160 µm to 240 µm.

10. The electrochemical apparatus according to claim 1, wherein the positive electrode current collector comprises Fe, Si, and Cu, and based on a mass of the positive electrode current collector, a mass percentage W_{Fe} of Fe satisfies 0.1%≤W_{Fe}≤0.5%, a mass percentage W_{Si} of Si satisfies 0.02%≤W_{Si}≤0.35%, and a mass percentage W_{Cu} of Cu satisfies 0.01%≤W_{Cu}≤0.15%.

11. An electronic apparatus comprising the electrochemical apparatus according to any one of claims 1 to 10.
